# EUROPEAN PATENT SPECIFICATION

(11) **EP 1 372 787 B1**
(45) Date of publication and mention of the grant of the patent: **02.02.2005**
(21) Application number: 02721528.4
(22) Date of filing: 22.03.2002
(51) Int. Cl.: A62B 3/00

(54) **SPRING-LOADED CAR WINDOW BREAKER AND RETRACTABLE SAFETY SHEATH**
FEDERDRUCKBELASTETER AUTOFENSTERZERBRECHER MIT AUSZIEHBARER SCHÜTZHÜLLE
BRISE-VITRES D'AUTOMOBILES A GAINE DE SECURITE RETRACTABLE

(30) Priority: 22.03.2001 US 815285
(43) Date of publication of application: 02.01.2004
(73) Proprietor: Task Force Tips, Inc., Valparaiso, IN 46383 (US)
(72) Inventor: STEINGASS, Robert, W., Valparaiso, IN 46385 (US); KOLACZ, David, J., Plymouth, IN 46563 (US)
(74) Representative: Neumann, Ditmar
(86) International application number: PCT/US2002/008755
(87) International publication number: WO 2002/076554

(56) References cited:
- GB-A- 2 173 237
- JP-A- 10 314 327
- US-A- 3 172 204
- US-A- 5 097 599
- US-A- 5 605 271
- US-A- 5 657 543

## Description

This application is a continuation-in-part of Application No. 09/815,285 (US 6418628 B) filed March 22, 2001.

### FIELD AND BACKGROUND OF THE INVENTION

This invention relates generally to an emergency glass breaking device, and more particularly to a spring-loaded emergency glass breaking device that is easy and safe to use, and can be conveniently carried on a key chain or in a pocket or purse.

Glass breaking devices can be used in emergencies to gain access to or provide escape from an automobile or building. Specialized glass breaking devices typically include a handle and a spike. The handle is swung like a hammer to impact the spike on a pane of glass to be broken. The spike is made of steel and is pointed to maximize the breaking power of the device.

Most glass breaking devices are available to emergency personnel such as firefighters, police, and emergency medical technicians. Some such devices are combined with other tools that are likely to be used by emergency personnel. For example, the Res-Q-Rench® available from Task Force Tips, Inc. of Valparaiso, Indiana includes a glass breaking spike, a spanner wrench, a pry tool, a gas main wrench slot, and a seat belt cutter for extricating automobile passengers who are unable to remove their seat belts. Such devices are convenient and work extremely well, but they are not typically available to the general public.

Even if such a device were available to the general public, it would be inconvenient to carry in a pocket or purse, it would include tools that are unlikely to be used, and it is unlikely to be conveniently accessible for use in an emergency.

Further, glass breaking devices are typically wielded like a hammer. Some users may not have the strength or swinging room to use such devices effectively. Even when able to break glass, the force of the impact could cause shards of glass to hit people in the vicinity.

Thus, there is a need for a glass breaking device that is conveniently carried even by non-emergency personnel, and is safe and easy to use effectively.

### SUMMARY OF THE INVENTION

The present invention is a glass breaking tool that is convenient to carry on a key chain, in a pocket or purse, or automobile glove compartment. It is spring-loaded and operates with a simple push of the device toward a window to be broken. This permits escape from a vehicle when time is critical, such as underwater entrapment.

The invention is capable of breaking glass conforming to Federal Motor Vehicle Standard No. 205 (37 C.F.R. §571.205). Further, some embodiments of the invention have seat belt cutters capable of cutting belts and shoulder harnesses conforming to Federal Motor Vehicle Safety Standard No. 209 (49 C.F.R. §571.209).

One embodiment of the present invention includes: a housing; a glass breaking spike; a retractable safety sheath that shields the spike from snagging on clothing and also surrounds the spike while glass is broken to contain broken shards of glass; and a spring-loaded mechanism to impact the glass breaking spike with enough force to reliably break glass.

In another embodiment, the window breaker can be cocked and fired in one motion. Preferably, the window breaker is cocked and fired by placing the window breaker against the window and pushing an outer housing toward the window. Pushing the housing part way toward the window compresses a spring that causes the device to be cocked. Pushing the housing the remainder of the way causes the spike to be released so that the spring quickly urges the spike to impact and break the glass.

The invention preferably is small enough to carry on a key chain, and it preferably includes at least one additional tool such as a seat belt cutter. When designed for being hung on a key chain, the connection to the keys can be easily releasable so that the glass breaker can be used without interference from the keys.

More features and objects of the invention are described below.

### BRIEF DESCRIPTION OF THE DRAWINGS

Fig. 1 is a perspective view of a spring-loaded window breaker in accordance with the present invention;

Fig. 2A is a cross-sectional view of a spring-loaded window breaker in the "ready" position;

Fig. 2B is the spring-loaded window breaker of Fig. 2A, in the "cocked" position;

Fig. 2C is the spring-loaded window breaker of Fig. 2A in the "fire" position; and

Fig. 2D is the spring-loaded window breaker of Fig. 2A in the "break" position.

Fig. 3 is a perspective view of an alternate embodiment of a spring-loaded glass breaker and seat belt cutter in accordance with the present invention;

Fig. 4 is the alternate embodiment of the device of Fig. 3 with a plastic key ring guard removed from the seat belt cutter;

Fig. 5A is a cross-sectional view of an alternate embodiment of a spring-loaded glass breaker in the "ready" position;

Fig. 5B is the glass breaker of Fig. 5A in the "cocked" position;

Fig. 5C is the glass breaker of Fig. 5A in the "fire" position;

Fig. 5D is the glass breaker of Fig. 5A in the "break" position; and

Fig. 6 is an exploded view of the glass breaker of Figs. 5A-5D.

### DETAILED DESCRIPTION OF THE DRAWINGS

In the following detailed description of the drawings, the same reference numeral will be used in each of the figures to identify the same element.

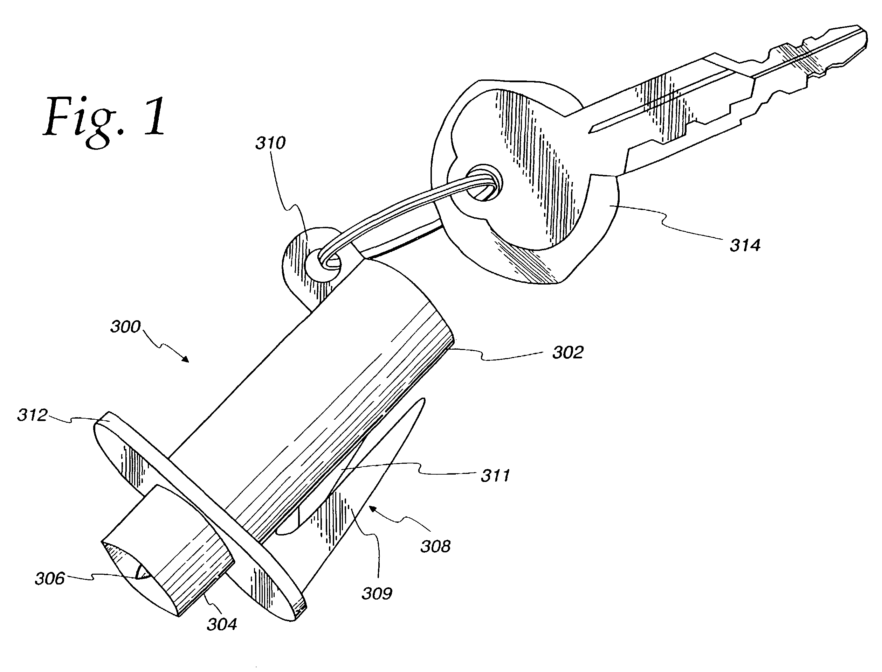

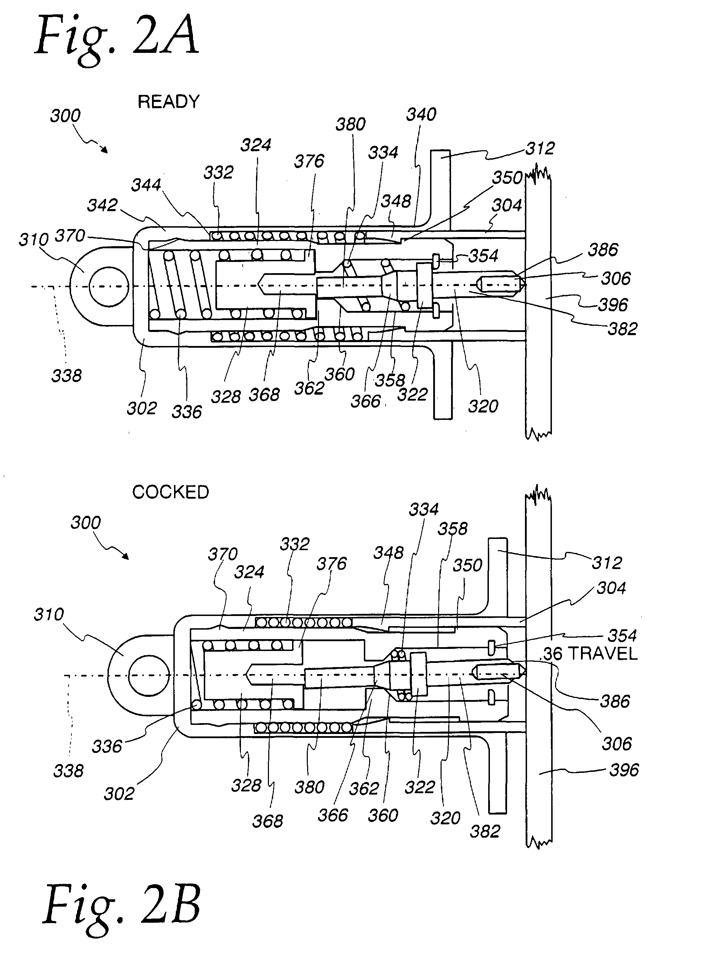

One embodiment of a tool in accordance with the present invention, is a spring-loaded glass breaker 300 (Figs. 1 and 2A-2D.) In Fig. 1, the glass breaker 300 is illustrated having a housing 302, a safety sheath 304, a glass breaking spike 306, a seat belt cutter 308, and a key chain loop 310. The key ring bob may be fitted with a pop-apart key ring connector to facilitate rapid retrieval of the multi-purpose tool in the event of emergency thereby eliminating the time and effort needed to extract the ignition key from the steering column of the car. One half of the pop-apart connector could be molded into the housing 302, and the other half of the connector mated to the key ring with an eyehole.

The housing 302 is illustrated in its preferred approximate size and configuration, which is generally cylindrical with a finger platform 312 that is used to apply pressure toward a window to be broken. Preferably, the housing 302 includes the key chain loop 310 so that the glass breaker 300 can be conveniently carried with car keys 314. The housing 302 can be any shape or size and is preferably compact enough to be a key chain bob, as illustrated.

The housing 302 also preferably includes one or more other tools that are appropriate for use with a glass breaker or other convenience-type tool. As illustrated, the housing 302 includes an integral seat belt cutter 308. This seat belt cutter 308, which is used to cut seat belts and shoulder harnesses in vehicles to gain access to injured motorists and passengers. The cutter 308 is defined by a hook 309 formed in the housing 302. The hook 309 is relatively robust where it connects to, or is otherwise formed integrally with, housing 302. At the opposite end, the hook 309 tapers to nearly a point so that it can readily hook into the material to be cut without being hung up on other materials. Disposed in the cutter 308 is a cutting edge 311 such as a razor blade, preferably a blade made of stainless steel. The cutting edge 311 is preferably disposed at an angle to the hook 309, as illustrated, to form a deep v-shape in which the seat belt will be secured and efficiently cut. The cutting edge 311 can be molded into, press-fit, or otherwise embedded in the housing 302 and hook 309 using a suitable adhesive. The blade can be permanently attached to the tool 300, or secured in a way to be field replaceable by being, for example, sandwiched between screwed together halves of the tool 300.

The safety sheath 304 is in a shape that essentially matches the housing 302 shape so that the two can move relative to one another with ease. In the illustrated example, the safety sheath 304 is cylindrical and coaxial with the cylindrical housing 302. The housing 302 and the safety sheath 304 define a longitudinal axis 338 along which both can move during operation of the glass breaker 300.

The purpose of the safety sheath 304 is to shield the glass breaking spike 306 when not in use so that the spike 306 does not snap or puncture the user, pockets, purses, or anything else that may come into contact with the spike 306.

The spike 306 is preferably made of a hard material such as hardened steel or carbide. The spike 306 is threaded into, pressed into, or secured with a suitable adhesive, and can be permanently attached or be replaceable. When replaceable, the spike 306 can be threaded into the device 300, for example. The spike 306 has an initial diameter of 3/16 inches (0.476 cm) and tapers uniformly down to nearly a point. Preferably, the glass breaking spike 306 is made of carbide steel, C5 grade. This design concentrates the impact load on the desired location to maximize the stress applied to the glass 396 (in Fig. 2A-2D) for efficient breaking power. This arrangement further results in less flying glass and breakage in only the desired location to protect those in the vicinity from being cut.

Referring next to Figs. 2A through 2D, there is a cross-section of the glass breaker 300 in four of its primary operating positions. In each of the figures, the glass breaker 300 can be seen as including: the housing 302, the safety sheath 304, the glass breaking spike 306, a spike shaft 320, a spike shaft collar 322, a sleeve 324, a hammer 328, a safety sheath spring 332, a spike shaft spring 334, and a hammer spring 336. All of the components of this preferred embodiment are symmetrical about and move parallel to the longitudinal axis 338.

In addition to the features described above, the cross-sectional views illustrate that the housing 302 has two internal diameters, a large internal diameter 340 and a small internal diameter 342. The large internal diameter 340 portion accommodates movement of the safety sheath 304 while the portion of small internal diameter 342 provides an annular surface on which the sleeve 324 bears. In addition, the large internal diameter 340 portion houses a light safety sheath compression spring 332 which biases the safety sheath 304 coaxially outwardly (to the right, as viewed) from the housing 302. A step 344 between the small diameter 342 and large diameter 340 housing portions serves as a bearing surface for the safety sheath spring 332.

In addition to the description of the safety sheath 304 above, the cross-sectional views of Figs. 2A to 2B show that its inner surface includes an annular tab 348 that acts on a corresponding shoulder 350 of the sleeve 324 to prevent the safety sheath spring 332 from urging the safety sheath 304 out of the housing 302 completely.

Interior to the safety sheath 304 is the cylindrical sleeve 324 that includes a variety of radially inwardly extending shapes described in detail below. The sleeve 324 extends the full length of the housing 302 in the preferred embodiment. At the open end (to the right as illustrated), the sleeve 324 includes a radial retainer ring 354 that provides a stop to prevent the spike shaft 320 from being forced out of the housing 302 when struck by the hammer 328.

Inward (to the left as viewed) of the retainer ring 354, there is a smooth constant diameter portion 358 that ends with an inwardly extending ramp 360, on the inward side (left side, as viewed) of which there is a hammer stop platform 362. The purpose of the ramp 360 is to aid in alignment of the spike shaft 320 during operation by engaging a mating shaft ramp surface 366 on the spike shaft 320.

The hammer stop platform 362 prevents the hammer from being thrust outward of the housing 302 when the glass breaker 300 is fired.

Inward (to the left as viewed) of the hammer stop platform 362, is a smooth hammer bore portion 368 in which the hammer 328 slides during operation. Also, in an annular space defined by the hammer bore portion 368 and the hammer 328 is disposed the hammer spring 336.

Near the inward (left end) of the sleeve 324 is an outer ring 370 that engages a matching recess in the housing 302 to provide a snap engagement between the housing 302 and the sleeve 324 for ease of assembly.

The hammer 328 includes a hammer flange 376 on which the hammer spring 336 exerts its force. The hammer flange 376 also serves to prevent the hammer 328 from being trust outwardly by engaging the hammer stop platform 362, as described above.

The hammer 328 also includes an inner bore 378 for receiving and impacting the spike shaft 320 when the glass breaker 300 is fired.

The spike shaft 320 includes a portion of relatively small outer diameter 380, the shaft ramp 366 (described above), and a portion of relatively large diameter 382. The small diameter portion 380 mates with the hammer bore 378 as described above. The shaft ramp 366 mates with the sleeve ramp 360, as described above.

The large diameter portion 382 includes an outwardly extending bore 386 into which the glass breaking spike 306 is inserted and held, either using a set-screw (not illustrated) or a press-fit.

The large diameter shaft portion 382 also includes an integral or separately manufactured collar 322, which maintains the spike shaft 320 in contract with the sleeve 324 by slidably engaging the large internal diameter portion 342 of the sleeve 324.

The spike shaft 320 is typically maintained in a position that is slightly out of coaxial alignment with the other elements of the glass breaker 300. The spike shaft 320 is biased toward this position (see: Figs. 2A and 2B) by spike shaft spring 334 so the inner (left) end of the spike shaft 320 engages the outer (right) end of the hammer 328. This engagement holds the hammer 328 in place while the hammer spring 336 is being compressed, as described in more detail below. This spike shaft 320 is realigned against the force of the spike shaft spring 334 when the spike shaft ramp 366 is engaged by the sleeve ramp 360 during operation. This engagement of the ramps shifts the orientation of the spike shaft 320 to a more coaxial alignment with the other components. When this occurs, the ends of the spike shaft 320 and the hammer 328 disengage and the hammer spring 336 is able to urge the hammer 328 toward the spike shaft 320.

The spike shaft spring 336 is an eccentrically wound spring made of a wire with a large diameter at its inner (left) end and a smaller diameter at its outer (right) end. This type of spring is capable of exerting all axial force, as well as a slight side load, which in this case, intentionally misaligns the spike shaft 320, as described.

### OPERATION

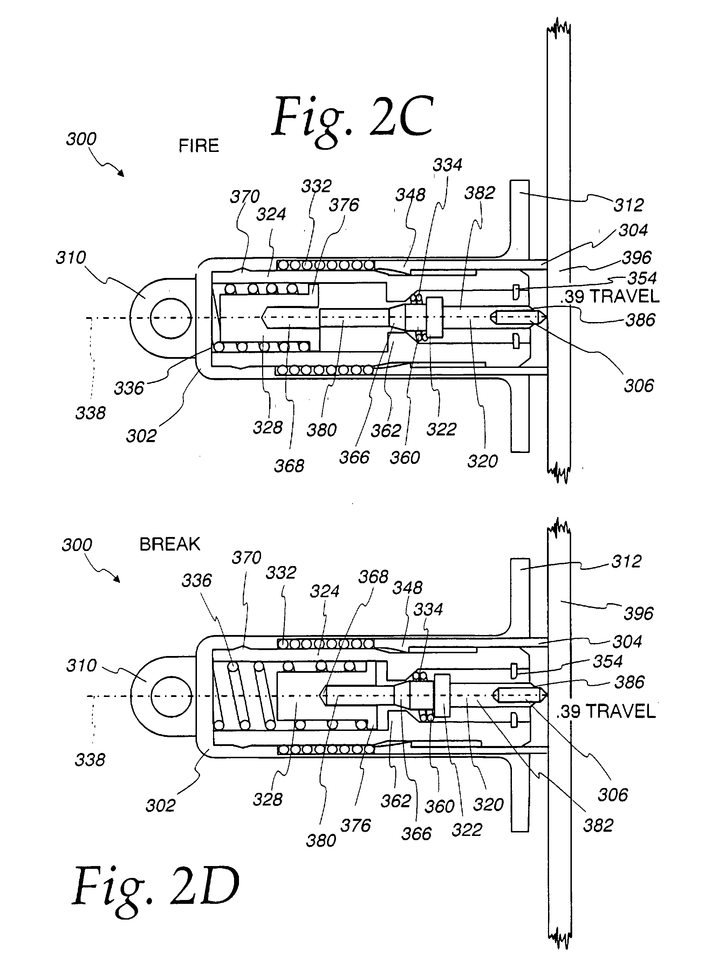

During operation, the glass breaker 300 proceeds through essentially four primary operating positions: the ready position (Fig. 2A); the cocked position (Fig. 2B); the fire position (Fig. 2C); and the break position (Fig. 2D).

In the ready position, the housing 302 and sleeve 324 are spaced from a pane of glass 396, the safety sheath 304 is placed against the glass 396, the hammer 328 is resting against the sleeve 324, the spike shaft 320 is at its outermost position (right-most) relative to the housing 302, and the glass breaking spike 306 is resting against the glass 396.

Also in the ready position (Fig. 2A), the safety sheath spring 332 is biasing the safety sheath 304 outward to shield the spike 306 from inadvertent damage to people and property. The spike shaft spring 334 is biasing the spike shaft out of coaxial alignment with axis 338 to engage the hammer 328, and the hammer spring 336 has a slight bias on the hammer 328 toward the sleeve's hammer stop platform 362.

In the cocked position (Fig. 2B), a user (not illustrated) has exerted finger pressure against the finger platform 312 of the housing 302 to move the housing 302 and the sleeve 324 toward the glass 396. The distance moved toward the glass 396 is not the complete length to be traveled by the housing 302 and sleeve 324, but in a preferred embodiment, it is about 90% of the entire travel distance. In a most preferred embodiment, the distance traveled by the housing 302 and the sleeve 324 between the ready position (Fig. 2A) and the cocked position (Fig. 2B), is about .36 inches (0.914cm).

Also in response to the user pressing on the finger platform, the safety sheath spring 332 is compressed so that the safety sheath 304 can remain in contact with the glass 396, but also slide into the housing 302, as illustrated.

The movement of the sleeve 324 compresses the hammer spring 336 against the hammer 328. The hammer is maintained in position by the end of the spike shaft 320 and the spike shaft spring 334, as described.

The spike shaft 320 has been moved inward (to the left) relative to the sleeve 324 and housing 302, but the spike shaft ramp 366 has not engaged (in any appreciable amount) the sleeve ramp 360.

In the fire position (Fig. 2C), the user has pushed the housing 302 and the sleeve 324 their entire distance of travel toward the pane of glass 396. Preferably, the distance between the housing in the cocked position and the fire position is about 10% of the total distance traveled by the housing 302 during operation. In a most preferred embodiment, that distance is about .03 inches (0.762 cm), while the total distance from ready (Fig. 2A) to fire (Fig. 2B) is .39 inches (0.990 cm).

When the housing 302 has been moved to the fire position (Fig. 2C), the safety sheath 304 is still compressing the safety sheath spring 334.

The additional movement of the housing 302 and the sleeve 324 has forced the sleeve ramp 360 into contact with the spike shaft 320 ramp 366. The engagement of the sleeve ramp 360 and the spike shaft ramp 366 to align the spike shaft 320 coaxially against the bias of the spike shaft spring 334, which in turn disengages the spike shaft 320 and the hammer 328. When disengaged, the hammer spring 336 is no longer compressed and the hammer spring 336 will, in an instant, expand to move the hammer 328 outwardly (to the right as viewed).

The result of the hammer spring 336 expanding, is that the hammer 328 impacts the spike shaft 320 to break the glass 396 (Fig. 2D). In this position, the housing 302 and sleeve 324 are still at their greatest distance traveled, the safety sheath is still in contact with the glass to shield the user from flying glass, and the glass breaking spike 306 impacts the glass 396 for only a small distance, but enough to shatter the glass 396.

All of the above-described movements can take place as a result of a single pushing movement by the user, and they all occur in a short time. Thus, the glass breaker 300 is useful in emergencies and can be used with little thought as to its operation.

Suitable materials for the glass breaker components include, but are not limited to: housing (plastic such as nylon); safety sheath (low strength impact resistant plastic such as polyethylene); spike shaft (metal such as carbon steel); sleeve (High Impact plastic such as nylon, or lightweight metal such as aluminum); spike shaft collar (preferably a standard retaining ring made from spring steel); hammer (low carbon steel); and springs (music wire).

A foam doughnut (not pictured) may be placed between the sheath and the spike shaft to limit dirt infiltration into the mechanism, and to maintain a coaxial position on the spike end of the spike shaft relative to the sheath during firing.

The materials specified above for use in the multipurpose tool provide sufficient strength and rigidity for most situations, while concurrently providing a lightweight tool that is easily manufactured and carried. Also, the proportions of the handle 22 and spanner claw provide additional rigidity and also substantial surface area on which information or advertising can be printed. It should be understood that the exact arrangement of the tool's functional features is not limited to the single embodiment depicted in the drawings. Further, the tool 20 as illustrated includes numerous ornamental features that add to the tool's distinctive look, separate and apart from the functional features described above.

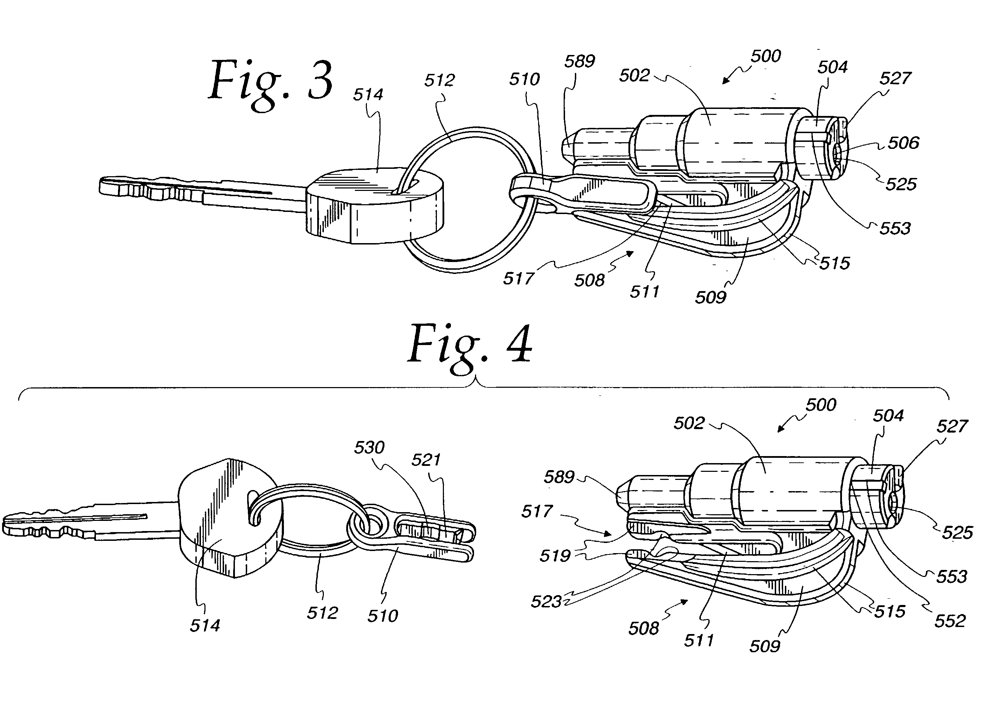

An alternate embodiment of a glass breaker 500 in accordance with the present invention is disclosed in Figs. 3 through 6. Referring to Figs 3 and 4, the glass breaker 500 includes a housing 502, a safety sheath 504, a glass breaking spike 506, a seat belt cutter 508, a key chain loop 510 for securing the glass breaker 500 to a key ring 512 and a key 514.

The housing 502 is illustrated in its preferred approximate size and configuration, which generally has several coaxial cylindrical tiers. The housing 502, as manufactured, is open at each end. The right end as viewed is closed off by the safety sheath 504. The left end as viewed is closed by a ball 589 that is press-fit into the housing 502 to protect the inner mechanism from dirt and moisture.

Preferably, the housing 502 includes the key chain loop 510 so that the glass breaker 500 can be conveniently carried with car keys 514. The housing 502 can be any external shape or size and is preferably compact enough to be a key chain bob, as illustrated.

The housing 502 also preferably includes one or more other tools that are appropriate for use with a glass breaker or other convenience-type tool. As illustrated, the housing 502 includes an integral seat belt cutter 508. This seat belt cutter 508 is used to cut seat belts and shoulder harnesses in vehicles to gain access to children or injured motorists and passengers. The cutter 508 is defined by a hook 509 formed in the housing 502. The hook 509 is relatively robust where it connects to, or is otherwise formed integrally with, the housing 502. At the opposite end, the hook 509 tapers to nearly a point so that it can readily hook into the material to be cut without being hung up on other materials. The hook 509 is preferably molded with one or more flanges 515, as illustrated, to provide ridgity.

Disposed in the cutter 508 is a cutting edge 511 such as a razor blade, preferably a blade made of stainless steel. The cutting edge 511 is preferably disposed at an angle to the hook 509, as illustrated, to form a deep v-shape in which the seat belt will be secured and efficiently cut. The cutting edge 511 can be molded into, press-fit, or otherwise embedded in the housing 502 and hook 509 using a suitable adhesive. The blade can be permanently attached to the tool 500, or secured in a way to be field replaceable by being, for example, sandwiched between screwed together halves of the tool 500.

The key chain loop 510 is preferably detachably connected to the glass breaker housing 502 so that the glass breaker 500 can be pulled from the keys 514 in an emergency without the need to remove the key 514 from the ignition.

In the illustrated embodiment, the key chain loop 510 serves a dual purpose of connecting the key 514 to the housing 502, as well as, covering the cutting edge 511 to prevent inadvertent damage to clothing, upholstery, and even small fingers. The key chain loop 510 of the illustrated embodiment 500 is releasably engaged to the housing 502 by being press-fit into a slot 517 defined by the housing 502 and the hook 509.

The housing 502, hook 509, and key chain loop 510 all have mating recesses 519 and flanges 521 to provide and maintain alignment of the parts when they are being assembled and after assembly. Further, to provide a secure connection, there are preferably a pair of embossments in the recess 530 of the key chain loop 510 that mate with a pair of opposing notches 523 formed in the housing 502 and hook 509. It is desirable to make this connection firm to prevent inadvertent separation of the key chain loop 510. In essence, the key chain loop 510 serves as a blade guard that protects against slender body parts and other items from being cut by the cutting edge 511. For that reason, it is preferable that the connection require about eight pounds (17.6 kg) of force to remove the key chain loop 510. This amount of force is more than a small child is likely to produce, yet is more easily removed by an adult.

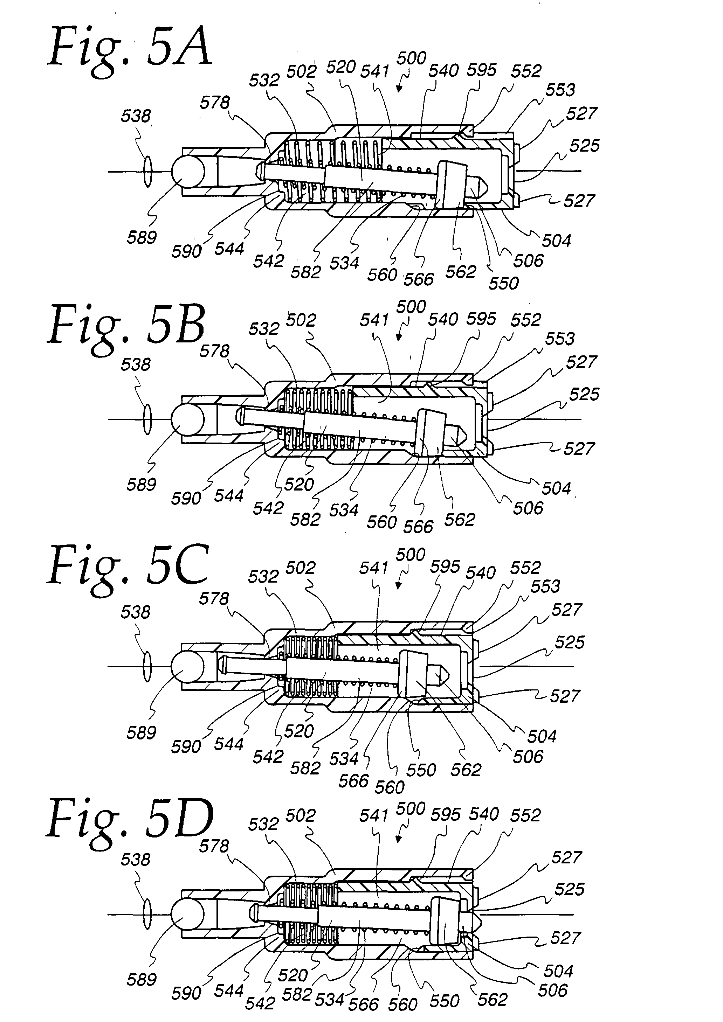

Referring to Figs. 5A to 5D, the safety sheath 504 is in a shape that essentially matches the housing 502 shape so that the two can move relative to one another with ease. In the illustrated example, the safety sheath 504 is cylindrical and coaxial with the cylindrical housing 502. The housing 502 and the safety sheath 504 define a longitudinal axis 538 along which both can move during operation of the glass breaker 500.

The purpose of the safety sheath 504 is to shield the glass breaking spike 506 when not in use so that the spike 506 does not snag or puncture the user, pockets, purses, or anything else that may come into contact with the spike 506. The safety sheath 504 also serves to cock the glass breaking spike 506 as the tool 500 is pressed against the glass. The safety sheath 504 is the only portion of the tool 500 that makes contact with the glass prior to the spike 506.

Further, the end of the safety sheath 504 is preferably closed except for an opening 525 large enough that the spike 506 can extend through it when it is intended to break glass. The opening 525 is eccentric with the tool 500 or the safety sheath 504 so that it matches the eccentric travel path of the spike 506, as described below. The end of the safety sheath 504 preferably includes ridged embossments 527 that help tolerate slight variations from perpendicular alignment when it is pushed against glass. The embossments also provide a way for water to escape inside of the tool 500 and the impact area when the tool 500 is operated underwater. It is important to provide for this escape of water to avoid the risk that the spike 506 could be slowed down excessively when operated under water.

The geometry of the spike 506 tip should not be too blunt or too sharp. If too blunt, the spike 506 will not be able to cause enough stress in the glass to cause breakage. If too sharp, the spike 506 may not be durable enough to withstand impact with the glass, thereby blunting the spike.

Preferably, the spike 506 has a conical tip with a 90° cone angle. The tip of the conical portion of the spike is preferably a flat area with a .003 to .007 inch (.076 mm to .178 mm) diameter. The spike 506 should be of sufficient hardness to retain proper tip geometry when impacting glass, such as 01 drill rod, heat treated to a Rockwell hardness of 60-65 on the C- scale.

Alternatively, a carbide ball of 0.04 inch (1 mm) in diameter (such as used in ball point pens) could be press-fit into the end of an unheated treated spike body. This arrangement would have a high degree of hardness and an extremely consistent geometry. (Not illustrated.)

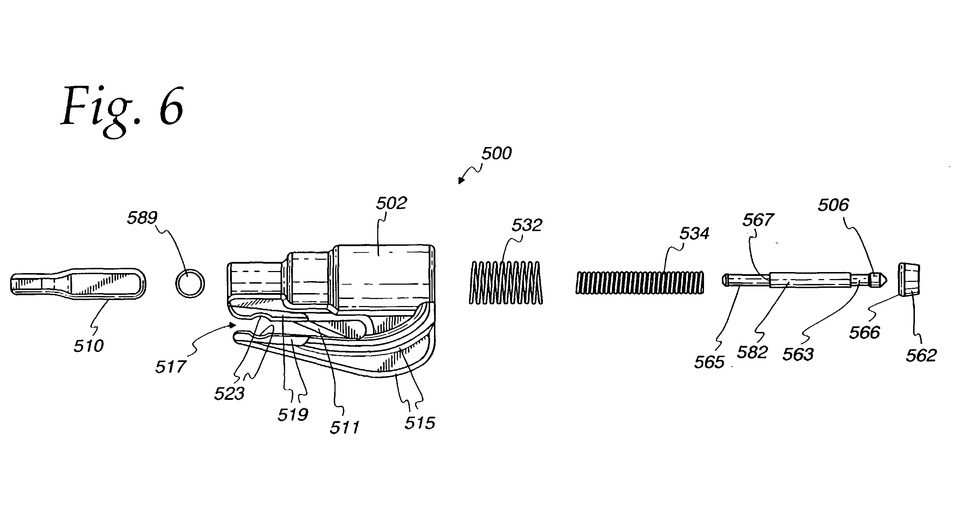

The spike 506 includes a collar 562 and a shaft 582. The spike 506 and collar 562 can be threaded together, snap-fit together, or secured with a suitable adhesive, and can be permanently attached or be replaceable. In the Fig. 6 embodiment, there is a snap-fit between a 1/8 inch (3.2 mm) diameter spike shaft 582 and a plastic collar 562 to form the spike 506.

The collar 562 fits into a cylindrical recess 563 on the shaft 582. The shaft 582 has a reduced section 565 that defines a shoulder 567 that limits the rearward travel of the spike 506 as the tool 500 is being cocked. The shoulder 567 engages a housing bore 578 when the tool 500 is in the cocked position and just prior to release.

Referring next to Figs. 5A through 5D, there is a cross-section of the glass breaker 500 in four of its primary operating positions. In each of the figures, the glass breaker 500 can be seen as including: the housing 502, the safety sheath 504, the glass breaking spike 506, a spike shaft 582, a spike shaft collar 562, a safety sheath spring 532, and a spike shaft spring 534. All of the components of this preferred embodiment are symmetrical about and move parallel to the longitudinal axis 538 with the exception of the spike 506 and spike spring 534 which are oriented at an angle for functional reasons as described below. To maintain the spike 506 at an angle to the housing 502, the spike spring 534 rests upon an angled floor 590 within the housing 502. The housing bore 578 also is ramped where it is engaged by the spike 506 to maintain the spike 506 in the appropriate orientation.

The housing 502 has integral tongues 552 that mate with grooves 553 in the safety sheath 504 to permit coaxial movement, but prevent relative rotation of these two parts. A tab 595 and a tongue 552 interact to form a snap that retains the safety sheath 504 in the housing 502 with a snap-fit.

In addition to the features described above, the cross-sectional views illustrate that the housing 502 has three internal diameters, a large internal diameter 540, an intermediate internal diameter 541, and a small internal diameter 542. The large 540 and intermediate internal 541 diameter portions accommodate movement of the safety sheath 504 while the small internal diameter 542 portion accommodates the left end of the spike 506. In addition, the intermediate internal diameter 541 portion houses a safety sheath compression spring 532 which biases the safety sheath 504 outwardly (to the right, as viewed) from the housing 502. A step 544 at the left end of the small diameter 542 housing portion serves as a bearing surface for the safety sheath spring 532 to bias the spike 506 outwardly (to the right as shown).

The interior of the safety sheath 504 is generally cylindrical and, as described above, is closed at its end to provide a stop for preventing the spike shaft 520 from being forced out of the housing 502 when the glass breaker 500 is operated.

The safety sheath 504 has a portion removed (on the bottom, as viewed) to define a shoulder 550 on which a collar 562 bears when in the positions depicted in Figs. 5A, 5B, and 5C. In this manner, the safety sheath 504 can be pushed against glass to force the spike 506 inward against the force of springs 532 and 534, (Fig. 5B).

The spike collar 562 has a collar ramp 566 on its inner edge. The spike collar ramp 566 mates with a housing ramp 560 during operation.

As described above, the spike 504 is typically maintained in a position that is slightly out of coaxial alignment with the other elements of the glass breaker 500. The spike 506 is biased toward this position (see: Figs. 5A and 5B) by spike spring 534, but it is realigned against the force of the spike spring 534 when the spike shaft ramp 566 is engaged by the housing ramp 560 during operation. This engagement of the ramps shifts the orientation of the spike 506 to a more coaxial alignment with the other components. When this occurs, the spike ramp 566 and the housing ramp 560 disengage and the spike spring 534 is able to quickly urge the spike 506 toward the glass for impact.

### OPERATION

During operation, the glass breaker 500 proceeds through essentially four primary operating positions: the ready position (Fig. 5A); the cocked position (Fig. 5B); the fire position (Fig. 5C); and the break position (Fig. 5D).

In the ready position, the safety sheath 504 has its ridged embossments 527 placed against the glass, the spike 506 is near its outermost position (right-most) relative to the housing 502, and the glass breaking spike 506 is resting against the shoulder 550 of the safety sheath 504.

Also in the ready position (Fig. 5A), the safety sheath spring 532 is slightly compressed and is biasing the safety sheath 504 outward to shield the spike 506 from inadvertent damage to people and property. The spike spring 534 is biasing the spike 506 out of coaxial alignment with axis 538 to engage the safety sheath shoulder 550.

In the cocked position (Fig. 5B), a user (not illustrated) has exerted finger pressure against the housing's outer surface 512 of the housing 502 to move the housing 502 toward the glass. The distance moved toward the glass 596 is not the complete length to be traveled by the housing 502 and sleeve 524, but in a preferred embodiment, it is about 60% of the entire travel distance. In a most preferred embodiment, the distance traveled by the housing 502 between the ready position (Fig. 5A) and the cocked position (Fig. 5B), is about 1/8 of an inch (3 mm).

Also in response to the user pressing on the housing's outer surface 512, the safety sheath spring 532 is compressed so that the safety sheath 504 can remain in contact with the glass, but also slide into the housing 502, as illustrated.

The spike 506 has been moved inward (to the left) relative to the housing 502 by the shoulder 550 on the safety sheath 504, but the spike shaft ramp 566 has not engaged (in any appreciable amount) the housing ramp 560.

In the fire position (Fig. 5C), the user has pushed the housing 502 its entire distance of travel toward the pane of glass. Preferably, the distance between the housing in the cocked position and the fire position is about 40% of the total distance traveled by the housing 502 during operation. In a most preferred embodiment, that distance is about 3/32 of an inch (2.5 mm), while the total distance from ready (Fig. 5A) to fire (Fig. 5B) is .39 inches (0.990 cm).

When the housing 502 has been moved to the fire position (Fig. 5C), the safety sheath 504 is still compressing the safety sheath spring 534.

During the additional movement of the housing 502 has forced the housing ramp 560 into contact with the spike ramp 566. The engagement of the housing ramp 560 and the spike ramp 566 to realign the spike 506 toward the axis 538 against the bias of the spike shaft spring 534, which in turn disengages the spike 506 from the housing ramp 560. When disengaged, the spike spring 536 is no longer compressed and will, in an instant, expand to move the spike 506 outwardly (to the right as viewed). In the illustrated embodiment, the estimated velocity of the spike at impact is 40 feet/second (12.19 m) in air or at a slightly slower velocity (about 90% of the total velocity will be retained) when operated under water.

The result of the spike spring 536 expanding, is that the spike 506 impacts and breaks the glass (Fig. 5D). In this position, the housing 502 is still at its greatest distance traveled, the safety sheath 504 is still in contact with the glass to shield the user from flying glass, and the glass breaking spike 506 impacts the glass for only a small distance, but enough to shatter the glass. This allows the spike 506 to break glass, but not injure a person if the tool 500 were operated against skin. The device is intended to shatter tempered glass, but in the illustrated embodiment, it will not shatter laminated glass.

All of the above-described movements can take place as a result of a single pushing movement by the user, and they all occur in a short time. Thus, the glass breaker 500 is useful in emergencies and can be used with little thought as to its operation.

Suitable materials for the glass breaker components include, but are not limited to: housing (plastic such as nylon); safety sheath (low strength impact resistant plastic such as polyethylene); spike shaft (metal such as carbon steel); sleeve (High Impact plastic such as nylon, or lightweight metal such as aluminum); spike shaft collar (preferably a standard retaining ring made from spring steel); hammer (low carbon steel); and springs (music wire).

The materials specified above for use in the multipurpose tool provide sufficient strength and rigidity for most situations, while concurrently providing a lightweight tool that is easily manufactured and carried.

The foregoing detailed description of the drawings is provided for clearness of understanding only, and is not intended to unnecessarily limit the claims below.

## Claims

1. A glass breaking apparatus comprising:
a housing (302);
a safety sheath (304) slidably disposed in the housing;
a spike (306) disposed at least partially in the housing;
a safety sheath spring (332) in biasing engagement with the housing to bias the safety sheath toward a ready position; and
a spike spring (334) in biasing engagement with the housing to bias the spike toward a break position;
wherein the housing is moved toward a glass pane to compress the safety sheath spring and the spike spring until the spike is disengaged from the safety sheath to release the spike to the urging of the spike spring, and urge the spike into breaking impact with the glass.

2. The glass breaking apparatus of claim 1, wherein:
the housing defines an internal ramp; and
the spike includes a ramp that engages the housing internal ramp to move from a cocked position to the break position.

3. The glass breaking apparatus of claim 1, wherein:
the housing defines a longitudinal axis and an internal ramp; and
the spike is oriented along an axis that is not parallel to the housing axis and includes a spike ramp that engages the housing ramp to move toward parallel alignment with the housing axis when operated from a cocked position to the break position.

4. The glass breaking apparatus of claim 1, and further comprising:
a seat belt cutting tool joined to the housing.

5. The glass breaking apparatus of claim 1, and further comprising:
a seat belt cutter tool joined to the housing and defining a slot with the housing; and
a key chain loop that is removably disposed in the slot.

6. A glass breaking apparatus comprising:
a housing (302);
a spike (306) disposed at least partially with the housing;
a spike spring (334) in biasing engagement with the spike to bias the spike toward a break position;
a spike cocking member (304) that engages a glass pane to be broken and compresses the spike spring to move the spike to a cocked position; and
a spike release (360, 366) that disengages the spike from the spike cocking member, whereby the spike spring urges the spike toward the glass pane to be broken.

7. The glass breaking apparatus of claim 6, wherein the spike cocking member is a safety sheath.

8. The glass breaking apparatus of claim 6, wherein the spike release comprises:
an internal ramp joined to the housing; and
a spike ramp joined to the spike that engages the housing internal ramp to move the spike from a cocked position to the break position.

9. The glass breaking apparatus of claim 6, wherein the spike release comprises:
an internal ramp joined to the housing; and
a spike ramp joined to the spike that engages the housing ramp to realign the spike relative to the housing when operated from a cocked position to the break position.

10. The glass breaking apparatus of claim 6, and further comprising:
a seat belt cutting tool joined to the housing.

11. The glass breaking apparatus of claim 6, and further comprising:
a seat belt cutter tool joined to the housing and defining a slot with the housing; and
a key chain loop that is removably disposed in the slot.

12. A glass breaking apparatus comprising:
a housing (302),
a spike (306) operatively joined to the housing and disposed for movement relative to the housing;
a spike spring (334) in biasing engagement with the spike to bias the spike toward a break position;
a spike cocking member (304) that engages a glass pane to be broken thereby compressing the spike spring to move the spike to a cocked position;
a spike release (360, 366) that disengages the spike from the cocked position, whereby the spike spring urges the spike toward a glass pane to be broken; and
a seat belt cutting tool joined to the housing.

13. The glass breaking apparatus of claim 12, wherein the spike cocking member is a spike safety sheath.

14. The glass breaking apparatus of claim 12, wherein the spike release comprises:
an internal ramp joined to the housing; and
a spike ramp joined to the spike that engages the housing internal ramp to move the spike from a cocked position to the break position.

15. The glass breaking apparatus of claim 12, wherein the spike release comprises:
an internal ramp joined to the housing; and
a spike ramp joined to the spike that engages the housing ramp to realignment of the spike relative to the housing when operated from a cocked position to the break position.

16. The glass breaking apparatus of claim 12, and further comprising:
a seat belt cutter tool joined to the housing and defining a slot with the housing; and
a key chain loop that is removably disposed in the slot.

## Patentansprüche

1. Eine Glaszerbrechvorrichtung, umfassend:
ein Gehäuse (302);
eine Schutzhülle (304), die gleitfähig in dem Gehäuse angeordnet ist;
einen Dom (306), der zumindest teilweise in dem Gehäuse angeordnet ist;
eine Schutzhüllenfeder (332), die sich in Vorspannungseingriff mit dem Gehäuse befindet, um die Schutzhülle in eine Bereitschaftsstellung vorzuspannen; und
eine Dornfeder (334), die sich in Vorspannungseingriff mit dem Gehäuse befindet, um den Dom in eine Zerbrechposition hin vorzuspannen,
wobei das Gehäuse gegen eine Glasscheibe bewegt wird, um die Schutzhüllenfeder und die Dornfeder zusammenzudrücken, bis sich der Dom aus der Schutzhülle löst, um ihn der Wirkung der Domfeder auszusetzen und den Dorn in Bruchaufprall mit dem Glas zu bringen.

2. Die Glaszerbrechvorrichtung nach Anspruch 1, wobei:
das Gehäuse eine Innenrampe definiert und der Dom eine Rampe umfasst, die in Eingriff mit der Gehäuseinnenrampe kommt, um sich aus einer Einspannstellung in die Zerbrechstellung zu bewegen.

3. Die Glaszerbrechvorrichtung nach Anspruch 1, wobei:
das Gehäuse eine Längsachse und eine Innenrampe definiert; und der Dom entlang einer Achse orientiert ist, die nicht parallel zur Gehäuseachse ist und eine Dornrampe umfasst, die in Eingriff mit der Gehäuserampe kommt, um sich in die parallele Ausrichtung zur Gehäuseachse zu bewegen, wenn er aus einer Einspannstellung in die Zerbrechstellung betätigt wird.

4. Die Glaszerbrechvorrichtung nach Anspruch 1, weiterhin umfassend:
ein Sicherheitsgurtschneidwerkzeug, das mit dem Gehäuse verbunden ist.

5. Die Glaszerbrechvorrichtung nach Anspruch 1, weiterhin umfassend:
ein Sicherheitsgurtschneidwerkzeug, das mit dem Gehäuse verbunden ist und das mit dem Gehäuse einen Schlitz definiert; und
eine Schlüsselkettenschlaufe, die entfernbar in dem Schlitz angeordnet ist.

6. Eine Glaszerbrechvorrichtung, umfassend:
ein Gehäuse (302);
einen Dorn (306), der zumindest teilweise in dem Gehäuse angeordnet ist;
eine Dornfeder (334), die sich in Vorspannungseingriff mit dem Dom befindet, um den Dom in eine Zerbrechposition hin vorzuspannen;
ein Dorneinspannelement (304), das auf eine zu zerbrechende Glasscheibe aufgesetzt wird und die Domfeder zusammendrückt, um den Dom in eine Einspannstellung zu bewegen; und
eine Dornfreigabe (360, 366), die den Dom aus dem Domeinspannelement löst, wobei die Dornfeder den Dom hin zu der zu zerbrechenden Glasscheibe treibt.

7. Die Glaszerbrechvorrichtung nach Anspruch 6, wobei das Dorneinspannelement eine Schutzhülle ist.

8. Die Glaszerbrechvorrichtung nach Anspruch 6, wobei die Dornfreigabe folgendes umfasst:
eine Innenrampe, die mit dem Gehäuse verbunden ist und
eine Dornrampe, die mit dem Dorn verbunden ist, der in Eingriff mit der Gehäuseinnenrampe kommt, um den Dorn aus einer Einspannstellung in die Zerbrechstellung zu bewegen.

9. Die Glaszerbrechvorrichtung nach Anspruch 6, wobei die Domfreigabe folgendes umfasst:
eine Innenrampe, die mit dem Gehäuse verbunden ist; und
eine Dornrampe, die mit dem Dorn verbunden ist, der in Eingriff mit der Gehäuserampe kommt, um den Dorn relativ zum Gehäuse wieder auszurichten, wenn er von einer Einspannstellung aus in die Zerbrechstellung betätigt wird.

10. Die Glaszerbrechvorrichtung nach Anspruch 6, weiterhin umfassend:
ein Sicherheitsgurtschneidwerkzeug, das mit dem Gehäuse verbunden ist.

11. Die Glaszerbrechvorrichtung nach Anspruch 6, weiterhin umfassend:
ein Sicherheitsgurtschneidwerkzeug, das an das Gehäuse angeschlossen ist und das mit dem Gehäuse einen Schlitz definiert; und
eine Schlüsselkettenschlaufe, die entfernbar in dem Schlitz angeordnet ist.

12. Eine Glaszerbrechvorrichtung, umfassend
ein Gehäuse (302);
einen Dorn (306), der betätigbar mit dem Gehäuse verbunden ist und zur Bewegung relativ zu dem Gehäuse angeordnet ist;
eine Dornfeder (334), die sich in Vorspannungseingriff mit dem Gehäuse befindet, um den Dom in eine Zerbrechposition hin vorzuspannen;
ein Domeinspannelement (304), das auf eine zu zerbrechende Glasscheibe aufgesetzt werden kann, wobei die Domfeder dabei zusammengedrückt wird, um den Dorn in eine Einspannstellung zu bewegen;
eine Dornfreigabe (360, 366), die den Dom aus der Einspannposition löst, wobei die Dornfeder den Dom zu einer zu zerbrechenden Glasscheibe treibt; und
ein Sicherheitsgurtschneidwerkzeug, das mit dem Gehäuse verbunden ist.

13. Die Glaszerbrechvorrichtung nach Anspruch 12, wobei das Domeinspannelement eine Domschutzhülle ist.

14. Die Glaszerbrechvorrichtung nach Anspruch 12, die Dornfreigabe umfassend:
eine Innenrampe, die mit dem Gehäuse verbunden ist und
eine Dornrampe, die mit dem Dom verbunden ist und in Eingriff mit der Gehäuseinnenrampe kommt, um den Dorn aus einer Einspannstellung in die Zerbrechstellung zu bewegen.

15. Die Glaszerbrechvorrichtung nach Anspruch 12, die Dornfreigabe umfassend,
eine Innenrampe, die mit dem Gehäuse verbunden ist und
eine Dornrampe, die mit dem Dom verbunden ist und die in Eingriff mit der Gehäuserampe kommt, um den Dom wieder relativ zum Gehäuse auszurichten, wenn er von einer Einspannstellung aus in eine Zerbrechstellung betätigt wird.

16. Die Glaszerbrechvorrichtung nach Anspruch 12, weiterhin umfassend:
ein Sicherheitsgurtschneidwerkzeug, das mit dem Gehäuse verbunden ist und das mit dem Gehäuse einen Schlitz definiert und
eine Schlüsselkettenschlaufe, die entfernbar in dem Schlitz angeordnet ist.

## Revendications

1. Un dispositif brise-verre, comprenant :
un boîtier (302) ;
une gaine protectrice (304) qui est agencée dans le boîtier de manière à pouvoir glisser ;
un mandrin (306) qui est agencé au moins partiellement dans le boîtier ;
un ressort (332) de gaine protectrice en engagement de précontrainte avec le boîtier pour précontraindre la gaine protectrice vers une position d'attente ; et
un ressort de mandrin (334) en engagement de précontrainte avec le boîtier pour précontraindre le mandrin vers une position de brisement,
le boîtier étant déplacé vers une vitre pour comprimer le ressort de gaine protectrice et le ressort de mandrin jusqu'à ce que le mandrin soit désengagé de la gaine protectrice pour libérer le mandrin afin qu'il soit soumis à l'effet du ressort de mandrin et pour pousser le mandrin en brise-choc avec le verre.

2. Le dispositif brise-verre selon la revendication 1, dans lequel le boîtier définit une rampe interne ; et
le mandrin comprend une rampe qui s'engage dans la rampe interne du boîtier pour se déplacer à partir d'une position de serrage jusque dans la position de brisement.

3. Le dispositif brise-verre selon la revendication 1, dans lequel :
le boîtier définit un axe longitudinal et une rampe interne ; et le mandrin est orienté le long d'un axe qui n'est pas parallèle par rapport à l'axe du boîtier et comprend une rampe de mandrin qui s'engage dans la rampe de boîtier pour se déplacer vers l'alignement parallèle par rapport à l'axe du boîtier lorsqu'il est opéré à partir d'une position de serrage jusque dans la position de brisement.

4. Le dispositif brise-verre selon la revendication 1, comprenant en outre :
un outil coupe-ceinture de sécurité qui est relié au boîtier.

5. Le dispositif brise-verre de la revendication 1, comprenant en outre :
un outil coupe-ceinture de sécurité relié au boîtier et définissant une fente avec le boîtier ; et
un anneau de chaîne à clé qui est agencé dans la fente de manière à pouvoir être retiré.

6. Un dispositif brise-verre, comprenant :
un boîtier (302) ;
un mandrin (306) qui est agencé au moins partiellement dans le boîtier ;
un ressort de mandrin (334) en engagement de précontrainte avec le mandrin pour précontraindre le mandrin vers une position de brisement ;
un élément de serrage de mandrin (304) qui vient en prise avec une vitre à briser et qui comprime le ressort de mandrin pour déplacer le mandrin dans une position de serrage ; et
un moyen de libération (360, 366) de mandrin qui désengage le mandrin de l'élément de serrage de mandrin, le ressort de mandrin entraînant le mandrin vers la vitre à briser.

7. Le dispositif brise-verre selon la revendication 6, dans lequel l'élément de serrage de mandrin est une gaine protectrice.

8. Le dispositif brise-verre selon la revendication 6, dans lequel le moyen de libération de mandrin comprend :
une rampe interne reliée au boîtier ; et
une rampe de mandrin qui est reliée au mandrin et qui s'engage dans la rampe interne du boîtier pour déplacer le mandrin à partir d'une position de serrage jusque dans la position de brisement.

9. Le dispositif brise-verre selon la revendication 6, dans lequel le moyen de libération de mandrin comprend :
une rampe interne reliée au boîtier ; et
une rampe de mandrin qui est reliée au mandrin et qui s'engage dans la rampe de boîtier pour aligner à nouveau le mandrin relativement par rapport au boîtier lorsqu'il est opéré à partir d'une position de serrage jusque dans la position de brisement.

10. Le dispositif brise-verre selon la revendication 6, comprenant par ailleurs :
un outil coupe-ceinture de sécurité qui est relié au boîtier.

11. Le dispositif brise-verre selon la revendication 6, comprenant en outre :
un outil coupe-ceinture de sécurité qui est relié au boîtier et qui définit une fente avec le boîtier ; et
un anneau de chaîne à clé qui est agencé dans la fente de manière à pouvoir être retiré.

12. Un dispositif brise-verre, comprenant :
un boîtier (302) ;
un mandrin (306) lié opérationnellement au boîtier et agencé pour le déplacement relatif par rapport au boîtier ;
un ressort de mandrin (334) en engagement de précontrainte avec le mandrin pour précontraindre le mandrin vers une position de brisement ;
un élément de serrage (304) de mandrin qui vient en prise avec une vitre à briser tout en comprimant le ressort de mandrin pour déplacer le mandrin dans une position de serrage ;
un moyen de libération (360, 366) de mandrin qui désengage le mandrin de la position de serrage, le ressort de mandrin poussant le mandrin vers une vitre à briser ; et
un outil coupe-ceinture de sécurité qui est relié au boîtier.

13. Le dispositif brise-verre selon la revendication 12, dans lequel l'élément de serrage de mandrin est une gaine protectrice de mandrin.

14. Le dispositif brise-verre selon la revendication 12, dans lequel le moyen de libération de mandrin comprend :
une rampe interne, reliée au boîtier ; et
une rampe de mandrin qui est reliée au mandrin et qui s'engage dans la rampe interne du boîtier pour déplacer le mandrin à partir d'une position de serrage jusque dans la position de brisement.

15. Le dispositif brise-verre selon la revendication 12, dans lequel le moyen de libération de mandrin comprend :
une rampe interne, reliée au boîtier ; et
une rampe de mandrin qui est reliée au mandrin et qui s'engage dans la rampe de boîtier pour réaligner le mandrin relativement par rapport au boîtier lorsqu'il est opéré à partir d'une position de serrage jusque dans la position de brisement.

16. Le dispositif brise-verre selon la revendication 12, comprenant par ailleurs :
un outil coupe-ceinture de sécurité qui est relié au boîtier et qui définit une fente avec le boîtier ; et
un anneau de chaîne à clé qui est agencé dans la fente de manière à pouvoir être retiré.
